# EUROPÄISCHE PATENTSCHRIFT

(11) **EP 1 249 453 B1**
(45) Veröffentlichungstag und Bekanntmachung des Hinweises auf die Patenterteilung: **12.11.2003**
(21) Anmeldenummer: 02004320.4
(22) Anmeldetag: 28.02.2002
(51) Int. Cl.: C07F 7/16

(54) **Staubrückführung bei der Direktsynthese von Chlor-und Methylchlorsilan in Wirbelschicht**
Direct synthesis of chloro- and methylchlorosilane in a fluid bed with dust recovery
Récupération de la poussière dans un procédé de fabrication des chloro- et des méthylchlorosilanes sur lit fluidisé

(30) Priorität: 12.04.2001 DE 10118483
(43) Veröffentlichungstag der Anmeldung: 16.10.2002
(73) Patentinhaber: Wacker-Chemie GmbH, 81737 München (DE)
(72) Erfinder: Kalchauer, Wilfried, Dr., 84489 Burghausen (DE); Straussberger, Herbert, 84561 Mehring-Öd (DE); Streckel, Willi, 84561 Mehring-Öd (DE); Gross, Jochen, 84561 Mehring-Öd (DE)
(74) Vertreter: Fritz, Helmut, Dr.

(56) Entgegenhaltungen:
- EP-A- 0 201 200
- EP-A- 0 784 057
- EP-A- 0 900 802

## Beschreibung

Die Erfindung betrifft ein Verfahren zur Direktsynthese von Chlorsilanen und Methylchlorsilanen in einer Wirbelschicht, bei dem entstehender Silicium enthaltender Staub in Form einer Suspension in die Wirbelschicht eingebracht wird.

Bei der Müller-Rochow-Direktsynthese wird Chlormethan mit Silicium in Gegenwart eines Kupferkatalysators und geeigneter Promotoren zu Methylchlorsilanen umgesetzt. Hier wird eine möglichst hohe Selektivität bezogen auf das Zielprodukt Dimethyldichlorsilan gefordert. Dimethyldichlorsilan wird beispielsweise für die Herstellung von linearen Polysiloxanen benötigt.

Bei der Direktsynthese von Chlorsilanen wird Silicium mit Chlorwasserstoff, gegebenenfalls in Gegenwart eines Kupferkatalysators, zu Trichlorsilan und Tetrachlorsilan umgesetzt. Chlorsilane werden beispielsweise für die Herstellung von pyrogener Kieselsäure benötigt. Pyrogene Kieselsäuren können auch aus Methylchlorsilanen und Gemischen aus Methylchlorsilanen und Chlorsilanen hergestellt werden, ohne dass die Produktqualität beeinträchtigt wird.

Bei beiden Verfahren wird neben einer möglichst hohen Produktivität (Menge an gebildeten Silanen pro Zeiteinheit und Reaktionsvolumen) auch eine möglichst hohe Siliciumnutzung, verbunden mit einem sicheren und gleichzeitig flexiblen Betrieb der gesamten Anlage gefordert.

Beide Verfahren können diskontinuierlich, kontinuierlich oder semikontinuierlich durchgeführt werden, in der industriellen Produktion wird bevorzugt kontinuierlich gearbeitet.

Die kontinuierliche Direktsynthese wird in Wirbelschichtreaktoren durchgeführt, in denen Chlormethan bzw. Chlorwasserstoff und gasförmige Reaktionsprodukte als Fluidisierungsmedium wirken. Das benötigte Silicium wird zuvor zu einem Pulver mit einer bestimmten Korngröße vermahlen.

Bei der Methylchorsilansynthese wird das Siliciumpulver mit Kupferkatalysatoren und Promotoren zur Kontaktmasse vermischt. Diese Kontaktmasse wird anschließend in den Wirbelschichtreaktor eingebracht und zur Reaktion gebracht. Nicht umgesetztes Chlormethan, die gasförmigen Methylchlorsilane, gasförmige Nebenprodukte, Katalysatorbestandteile und feinteilige Stäube verlassen den Reaktor.

In US-A-4281149, Fig. 1 ist ein System, bestehend aus Reaktor, Hauptzyklon mit Rückführung und Nachzyklon mit Staubsammelbehälter dargestellt. Bei diesem dargestellten Verfahren wird ein Teil, der im Nachzyklon abgeschiedenen Teilchen einer Oberflächenbehandlung zugeführt und anschließend wieder in den Reaktor eingeschleust. Dadurch soll eine hohe Siliciumnutzung erreicht werden.
Der nach dem/den Zyklon/en verbleibende Gasstrom enthält immer noch restliche Staubanteile, die vor der Destillation der Methylchlorsilane abgetrennt werden müssen.

In US-A-4328353 wird vorgeschlagen, den Gasstrom nach dem Durchgang durch den Zyklon einer Heißgasfiltration zuzuführen und das dabei anfallenden pulverförmige Material wieder in den Reaktor zurückzuführen oder auszuschleusen. Es wir auch die Möglichkeit aufgezeigt diese feinen Stäube ohne weiter Behandlung einer Umsetzung mit HCl (Chlorsilansynthese) zuzuführen.

EP-A-900802 beschreibt ebenfalls eine Heißgasfiltration mit anschließender Rückführung der Partikel.

Beim direkten Einschleusen von sehr feinteiligen Stäuben in Wirbelschichtreaktoren der Chlorsilansynthese oder Methylchlorsilansynthese werden diese Teilchen wieder sehr rasch ausgetragen und stehen dann einer Reaktion nicht zur Verfügung. Gleichzeitig führt dies zu einer erheblich stärkeren Belastung des gesamten Staubabscheidesystems.
Zusätzlich sind diese feinsten Silicium-Stäube in trockener Form äußerst reaktiv gegenüber Luft und Luftfeuchtigkeit, d.h. beim unbeabsichtigten Kontakt dieses Produktstromes mit Luft - wie dies im Falle einer Störung in der Anlage auftreten kann - ist mit einer spontanen Selbstentzündung zu rechnen.

Der vorliegenden Erfindung liegt die Aufgabe zugrunde, ein kontinuierliches Verfahren zur Direktsynthese von Chlorsilanen und Methylchlorsilanen in Wirbelschicht bereitzustellen, bei dem die entstehenden feinteiligen Stäube, die mit dem Reaktionsprodukt ausgetragen werden, wieder wirksam genutzt werden können.

Gegenstand der Erfindung ist ein kontiuierliches Verfahren zur Direktsynthese von Silanen der allgemeinen Formel 1

RₐSiCl₄₋ₐ (1),

durch Umsetzung von feinteiligem Siliciummetall mit R-Cl in Wirbelschicht, wobei
- **R**: Wasserstoff, Methyl oder Ethyl und
- **a**: die Werte 0, 1, 2, 3 oder 4 bedeuten,
wobei aus der Wirbelschicht ein Produktstrom ausgebracht wird, der gasförmige Silane der allgemeinen Formel 1, weitere gasförmige Reaktionsprodukte, nicht umgesetztes RCl und Silicium enthaltenden Staub enthält,
bei dem mindestens ein Teil des Staubs in Form einer Suspension in einer Flüssigkeit, die ausgewählt wird aus flüssigen Silanen der allgemeinen Formel 1, weiteren flüssigen Reaktionsprodukten und deren Gemischen, in die Wirbelschicht eingebracht wird.

Es wurde nun festgestellt, dass die im kontiuierlichen Wirbelschichtverfahren entstehenden feinsten Staubpartikel sehr leicht zu größeren Einheiten agglomerieren oder sich an vorhandene Si-Körner anlagern, wenn sie in Form einer Suspension in einen laufenden Wirbelschichtreaktor eingebracht werden. Dadurch verbleibt der Silicium enthaltende Staub lange in der Wirbelschicht und wird dort wirksam umgesetzt. Es wird eine Mehrbelastung des Staubabscheidesystems vermieden. Bei dem Verfahren können auch feinste Silicium haltige Stäube sicher gehandhabt werden. Es wird eine hohe allgemeine Siliciumnutzung erreicht. Es können Nachteile, wie Selektivitäts- und/oder Reaktivitätsverlust und/oder eine Verkürzung der Reaktorlaufzeit bei der Methylchlorsilansynthese vermieden werden.

Das für die Direktsynthese benötigte Silicium wird zuvor zu einem Pulver mit einer bestimmten Korngröße von vorzugsweise höchstens 2000 µm, insbesondere höchstens 500 µm vermahlen.

Die Korngröße des Staubs beträgt vorzugsweise höchstens 200 µm, insbesondere höchstens 30 µm.

Als weitere gasförmige Reaktionsprodukte sind im Produktstrom hauptsächlich Oligosilane, Carbosilane, Siloxane und hochsiedende Crackprodukte vorhanden.
Die gasförmigen Reaktionsprodukte werden verflüssigt und dienen wie die flüssigen Silane der allgemeinen Formel 1 als Suspensionsmittel für den Staub.

Als Suspensionen werden alle Mischungen von Staub und Flüssigkeit bezeichnet, die pumpbar sind, auch Aufschlämmungen und nach Aufrühren des Staubs kurzzeitige Suspensionen. Vorzugsweise sind die Suspensionen sprühfähig. Diese werden vorzugsweise in die Wirbelschicht eingedüst.
Zur Stabilisierung der Suspensionen können übliche Suspendierhilfsmittel zugesetzt werden.
Die Suspension enthält vorzugsweise 0,5 Gew.-% bis 30 Gew.-%, insbesondere 1 Gew.-% bis 10 Gew.-% an Staub.

Bei der Methylchorsilansynthese nach Müller-Rochow wird das Siliciumpulver mit Kupferkatalysatoren und Promotoren zur Kontaktmasse vermischt. Diese Kontaktmasse wird anschließend in den Wirbelschichtreaktor eingebracht und bei einer Temperatur. von vorzugsweise 260 - 350°C zur Reaktion gebracht. Da die Reaktion exotherm ist, muss die freiwerdende Reaktionswärme über ein Kühlsystem abgeführt werden. Gasförmige Produkte und feinteilige Stäube verlassen den Reaktor. Je nach Anlagenbauart können beispielsweise über einen oder mehrere Zyklone die gröberen mitgerissenen Partikel vom Gasstrom abtrennt und wieder in den Reaktor zurückgeführt oder über Staubsammelbehälter aus dem System ausgeschleust werden. Die feinstkörnigen, mitgerissenen Partikel können in nachgeschaltenen Anlageneinheiten abgetrennt werden. Dadurch kann eine hohe Siliciumnutzung sichergestellt werden.

Die Chlorsilansynthese wird bei einer Temperatur von etwa 300 - 800°C durchgeführt, die Reaktion ist ebenfalls exotherm, muss aber nicht katalysiert werden. Die Qualitätsansprüche die an das einzusetzende Silicium gestellt werden sind, in Vergleich zur Methylchlorsilansynthese, erheblich geringer, da in diesem Falle verschiedene Nebenelemente, die im Silicium enthalten sind, wie beispielsweise Ni oder Cr, nicht als Katalysatorgifte wirken und verschiedene Silicidphasen, wie beispielsweise FeSi₂ im Gegensatz zu MeCl mit HCl reagieren.

Es ist auch möglich, den bei einer Chlorsilansynthese gesammelten Staub in Form einer Suspension in die Wirbelschicht einer Methylchorsilansynthese nach Müller-Rochow einzubringen, bzw. den bei einer Methylchorsilansynthese nach Müller-Rochow gesammelten Staub in Form einer Suspension in die Wirbelschicht einer Chlorsilansynthese einzubringen.

Da ein vollständiges Rückführen aller Stäube in den Wirbelschichtreaktor, insbesondere bei der Methylchorsilansynthese, wie beispielsweise in EP-A-900802 beschrieben, bewirken kann, dass sich im Reaktionssystem katalytisch wirksame Gifte wie beispielsweise Blei, Chrom, Nickel und unreaktive Partikel wie beispielsweise Eisensilicide und Schlacke anreichern, kann somit die Selektivität, die Reaktivität, wie auch die Reaktorlaufzeit reduziert werden.

Deshalb werden vorzugsweise nur 10 bis 90 Gew.-%, insbesondere 20 bis 80 Gew.-% des Staubes in die Wirbelschicht rückgeführt. In einer anderen bevorzugten Variante erfolgt die Rückführung des Staubes, d.h. die Einbringung des Staubes als Suspension in die Wirbelschicht phasenweise, insbesondere zu Zeiten eines erhöhten Anfalles an Feinststäuben, wie dies beispielsweise bein Anfahren eines Reaktors der Fall sein kann.

Die fest-flüssig Trennung mittels Verdampfungsprozess oder Filtration ist effektiver als eine fest-gas Trennung mittels Heißgasfiltration. Es fällt daher nach der Heißgasfiltration beim Kondensieren des Produktstroms und/oder bei der Destillation der Methylchlorsilane ein zusätzlicher flüssiger staubhaltiger Methychlorsilan-Produktstrom an. Dieser staubhaltige Methychlorsilan-Produktstrom wird bevorzugt als Suspension in die Wirbelschicht eingebracht.

Beim vorliegenden Verfahren werden bevorzugt als Vorrichtungen zur Herstellung von Methylchlorsilanen im Wirbelschichtreaktor entweder (A) mindestens 2 Zyklone, eine anschließende Kondensiereinheit und eine nachgeschaltene Konzentratoreinheit oder (B) mindestens 2 Zyklone mit anschließender Heißgasfiltration und einer nachgeschaltenen Suspensionseinheit eingesetzt.

Eine bevorzugte Ausführungsform des Verfahrens erfolgt in Vorrichtung (A). Der aus dem Wirbelschichtreaktor der Methylchlorsilansynthese austretende Produktstrom durchläuft den 1. Zyklon. Dort werden die gröberen Partikel abgeschieden und wieder in den Reaktor zurückgeführt. Im 2. Zyklon werden die feineren Partikel abgeschieden. Diese können wahlweise in Form einer Suspension wieder in den Reaktor zurückgeführt oder ausgeschleust werden. Das Ausschleusen kann kontinuierlich oder taktweise erfolgen. Im verbleibenden Produktstrom werden durch geeignete Maßnahmen zumindest ein Teil der gebildeten Methylchlorsilane kondensiert. Dies kann beispielsweise durch Einleiten in flüssige Methylchlorsilane oder durch Einbringen in einen sogenannten Waschturm, der mit flüssigen Methylchlorsilanen betrieben wird, oder in eine Trennkolonne mit fraktionierenden Einbauten erfolgen. Die gasförmige Phase besteht nach diesem Prozess hauptsächlich aus nicht umgesetzten Chlormethan und leichtflüchtigen Methylchlorsilanen. Das Chlormethan wird nach einer entsprechenden Aufbereitung wieder in den Produktionsprozess eingeschleust. Die flüssige Phase besteht hauptsächlich aus Methylchlorsilanen und Feststoffen. Die Feststoffe werden durch eine geeignete Methode wie beispielsweise eine Filtration, insbesondere Querstromfiltration oder durch ein Verdampfen eines Teiles der Methylchlorsilane so weit aufkonzentriert, dass die Suspension zurückbleibt.

Die feststofffreien Methylchlorsilane werden der Destillation zugeführt, die Suspension wird in einen laufenden Wirbelschichtreaktor zur Herstellung von Methylchlorsilanen und/oder Chlorsilanen eingedüst.

Beim Eindüsen der Suspension verdampfen die Methylchlorsilane und die staubförmigen Partikel agglomerieren zu größeren, weitgehend stabilen Aggregaten bzw. lagern sich stabil an vorhandenen Si-Körnern an. Die Größe der Agglomerate hängt sehr stark von den gewählten Prozessbedingungen wie beispielsweise Feststoffgehalt der Suspension ab. Je nach Größe verbleiben die Agglomerate im Reaktor bzw. werden im 1. Zyklon abgeschieden und wieder dem Reaktor zugeführt.

Dieser Anteil steht wieder der gewünschten Reaktion zur Verfügung. Die kleinere Agglomerate werden im 2. Zyklon abgeschieden und verlassen über diesen Weg das Reaktionssystem. Die eingedüsten Methylchlorsilane gelangen letzendlich zur Destillation und müssen nicht mit dem Staub entsorgt werden.

Wird die Suspension in einen Reaktor zur Herstellung von Methylchlorsilanen eingebracht, so kann gleichzeitig der in US-A-5625088 beschriebene aktivierende Effekt der bereits eine Direktsynthese zur Herstellung von Methylchlorsilanen durchlaufenen Kontaktmassenteilchen realisiert werden.

Wird die Suspension in einen Reaktor zur Herstellung von Chlorsilanen eingebracht, und besteht die Flüssigphase hauptsächlich aus Methylchlordisilanen, so können diese gleichzeitig teilweise zu besser verwertbaren Methylchlorsilanen gespalten werden.

Eine weitere bevorzugte Ausführungsform des Verfahrens erfolgt in Vorrichtung (B). Der aus dem Wirbelschichtreaktor der Methylchlorsilansynthese austretende Produktstrom durchläuft den 1. Zyklon. Dort werden die gröberen Partikel abgeschieden und wieder in den Reaktor zurückgeführt. Anschließend erfolgt eine Heißgasfiltration wie beispielsweise in US-A-4328353 beschrieben. Die in diesem Bereich abgeschiedenen Stäube werden mit flüssigen Methylchlorsilanen und/oder Methylchlordisilanen oder feststoffbeladenen Methylchlorsilanen, die im anschließenden Destillationsbereich anfallen, derart gemischt, dass eine geeignete Suspension entsteht.

Vorzugsweise wird die Suspension wie bei Ausführungsform (A) weiterverarbeitet und insbesondere in einen Reaktor zur Herstellung von Chlorsilanen eingebracht, um Anreicherungen von störenden Elementen/Verbindungen zu verhindern.

## Patentansprüche

1. Kontiuierliches Verfahren zur Direktsynthese von Silanen der allgemeinen Formel 1
RₐSiCl₄₋ₐ (1),
durch Umsetzung von feinteiligem Siliciummetall mit R-Cl in Wirbelschicht, wobei
**R** Wasserstoff, Methyl oder Ethyl und
**a** die Werte 0, 1, 2, 3 oder 4 bedeuten,
wobei aus der Wirbelschicht ein Produktstrom ausgebracht wird, der gasförmige Silane der allgemeinen Formel 1, weitere gasförmige Reaktionsprodukte, nicht umgesetztes RCl und Silicium enthaltenden Staub enthält,
bei dem mindestens ein Teil des Staubs in Form einer Suspension in einer Flüssigkeit, die ausgewählt wird aus flüssigen Silanen der allgemeinen Formel 1, weiteren flüssigen Reaktionsprodukten und deren Gemischen, in die Wirbelschicht eingebracht wird.

2. Verfahren nach Anspruch 1, bei dem die Suspension 0,5 Gew.-% bis 30 Gew.-% an Staub enthält.

3. Verfahren nach Anspruch 1 oder 2, bei dem 10 bis 90 Gew.-%, des Staubes in die Wirbelschicht eingebracht werden.

4. Verfahren nach Anspruch 1 bis 3, bei dem der Staub phasenweise in Form einer Suspension in die Wirbelschicht eingebracht wird.

5. Verfahren nach Anspruch 1 bis 4, bei dem der Staub in Form einer Suspension in die Wirbelschicht einer Methylchorsilansynthese nach Müller-Rochow eingebracht wird.

6. Verfahren nach Anspruch 1 bis 4, bei dem der Staub in Form einer Suspension in die Wirbelschicht einer Chorsilansynthese eingebracht wird.

## Claims

1. Continuous process for the direct synthesis of silanes of the formula 1
RₐSiCl₄₋ₐ (1)
by reacting finely divided silicon metal with R-Cl in a fluidized bed, where
R is hydrogen, methyl or ethyl and
a is 0, 1, 2, 3 or 4,
where a product stream comprising gaseous silanes of the formula 1, further gaseous reaction products, unreacted RC1 and silicon-containing dust is discharged from the fluidized bed,
wherein at least part of the dust is introduced in the form of a suspension in a liquid selected from among liquid silanes of the formula 1, further liquid reaction products and mixtures thereof into the fluidized bed.

2. Process according to Claim 1, wherein the suspension contains from 0.5% by weight to 30% by weight of dust.

3. Process according to Claim 1 or 2, wherein from 10 to 90% by weight of the dust are introduced into the fluidized bed.

4. Process according to any of Claims 1 to 3, wherein the dust is introduced in the form of a suspension into the fluidized bed in phases.

5. Process according to any of Claims 1 to 4, wherein the dust is introduced in the form of a suspension into the fluidized bed of a methylchlorosilane synthesis by the Müller-Rochow method.

6. Process according to any of Claims 1 to 4, wherein the dust is introduced in the form of a suspension into the fluidized bed of a chlorosilane synthesis.

## Revendications

1. Procédé continu pour la synthèse directe de silanes de formule générale 1
RₐSiCl₄₋ₐ (1),
par réaction de silicium métallique finement divisé avec du R-Cl dans un lit fluidisé, dans laquelle
R représente un hydrogène, un méthyle ou un éthyle et
a représente les valeurs 0, 1, 2, 3 ou 4,
où un courant de produit comprenant des silanes gazeux de formule générale 1, d'autres produits de réaction gazeux, du RCl n'ayant pas réagi et de la poussière contenant du silicium, est soutiré du lit fluidisé,
dans lequel au moins une partie de la poussière est introduite dans le lit fluidisé sous forme d'une suspension dans un liquide qui est choisi parmi des silanes liquides de formule générale 1, d'autres produits de réaction liquides et leurs mélanges.

2. Procédé selon la revendication 1, dans lequel la suspension comprend de 0,5 % en poids à 30 % en poids de poussière.

3. Procédé selon la revendication 1 ou 2, dans lequel de 10 à 90 % en poids de la poussière sont introduits dans le lit fluidisé.

4. Procédé selon les revendications 1 à 3, dans lequel la poussière est introduite par phase dans le lit fluidisé sous forme d'une suspension.

5. Procédé selon les revendications 1 à 4, dans lequel la poussière est introduite sous forme d'une suspension dans le lit fluidisé d'une synthèse de méthylchlorosilane conformément à Müller-Rochow.

6. Procédé selon les revendications 1 à 4, dans lequel la poussière est introduite sous forme d'une suspension dans le lit fluidisé d'une synthèse de chlorosilane.
